# EUROPÄISCHE PATENTANMELDUNG

(11) **EP 1 744 529 A1**
(43) Veröffentlichungstag der Anmeldung: **17.01.2007**
(21) Anmeldenummer: 05015234.7
(22) Anmeldetag: 13.07.2005
(51) Int. Cl.: H04M 7/00, H04L 29/08

(54) **Verfahren zur Steigerung der Verfügbarkeit von Diensten in einem Peer-to-Peer-Kommunikationsnetz**

(71) Anmelder: SIEMENS AKTIENGESELLSCHAFT, 80333 München (DE)
(72) Erfinder: Böhm, Markus, 81379 München (DE); Haubs, Georg, Dr., 82069 Hohenschäftlarn (DE); Schrodi, Karl, 82538 Geretsried (DE)

(57) **Zusammenfassung**

Die Erfindung betrifft ein Verfahren zur Steigerung der Verfügbarkeit von Diensten in einem ersten Kommunikationsnetz (P2P) mit gleichgestellten Netzelementen (NE1, NE2, NE3, NE4), wobei eine Dienstesteuereinheit (SW) als gleichgestelltes Netzelement in das erste Kommunikationsnetz (P2P) eingebunden wird. Von dieser Dienstesteuereinheit (SW) werden dann Funktionen zur Verfügung gestellt. Durch diese Funktionen der Dienstesteuereinheit (SW) wird dann eine Zusammenarbeit des ersten Kommunikationsnetzes (P2P) mit mindestens einem weiteren Kommunikationsnetz (PSTN) ermöglicht. In speziellen Ausgestaltungen des erfindungsgemäßen Verfahrens sind das erste Kommunikationsnetz (P2P) als Peer-to-Peer-Netz und die Dienstesteuereinheit (SW) als so genannter Softswitch ausgestaltet.

Der Vorteil des erfindungsgemäßen Verfahrens besteht insbesondere darin, dass durch das Einbringen der Dienstesteuereinheit (SW) erst die Zusammenarbeit zwischen dem Kommunikationsnetz (P2P) mit gleichgestellten Netzelementen (NE1, NE2, NE3, NE4) und mindestens einem weiteren Kommunikationsnetz (PSTN) ermöglicht wird.

## Beschreibung

Die Erfindung bezieht sich auf ein Verfahren zur Steigerung der Verfügbarkeit von Diensten in einem Kommunikationsnetz mit gleichgestellten Netzelementen.

Ein Kommunikationsnetz ist definitionsgemäß ein Oberbegriff für alle Ressourcen, durch die voneinander entfernte so genannte Zugangspunkte zum Kommunikationsnetz miteinander verbunden werden. Es stellt einen Zusammenschluss von verschiedenen, technischen, primär selbstständigen elektronischen Systemen, die auch als Netzelemente bezeichnet werden, über Verbindungen dar. Durch das Kommunikationsnetz wird eine Kommunikation von einzelnen Netzelementen wie beispielsweise Computern, Kommunikationsendgeräten, aber auch Softwaremodulen, Sensoren oder funktechnologischen Komponenten, etc. untereinander ermöglicht.

Durch das Kommunikationsnetz werden aber auch den Netzelementen bzw. den Benutzer des Kommunikationsnetzes, die über Netzelemente wie z.B. Computer, Kommunikationsendgeräte oder Softwaremodule in Computern oder Kommunikationsendgeräten Zugang zum Kommunikationsnetz haben, Dienste mit Dienstmerkmalen zu Kommunikationszwecken zur Verfügung stellen. Solche Dienste sind beispielsweise die Übertragung von Sprache oder Daten zu Kommunikationszwecken. Dies trifft sowohl auf in ihrer Ausdehnung sehr begrenzte Kommunikationsnetz wie z.B. Firmennetze oder Local Area Networks LANs zu als auch auf Netze, die in ihrer Ausdehnung sehr groß sein können wie beispielsweise Wide Area Networks oder Telekommunikationsnetze.

Kommunikationsnetze wie z.B. Firmennetze oder LANs, aber auch große Netze wie das Internet können aufgrund ihrer Architektur - d.h. anhand des konzeptionellen Aufbaus des Kommunikationsnetzes - unterschieden werden. Dabei werden Kommunikationsnetzarchitekturen wie z.B. Hostsysteme, Client/Server-Systeme oder Systeme mit gleichgestellten Netzelementen unterschieden.

Bei Hostsystemen ist meist ein leistungsfähiger Zentralrechner bzw. Großrechner eingerichtet und die Benutzer erhalten über daran angeschlossene Terminals bzw. Datenendgeräte, die als reine Ein-/Ausgabegeräte ohne eigene Speicher- oder Rechenkapazität ausgestaltet sind, Zugang zum Kommunikationsnetzwerk.

Bei einem Client/Server-System werden zwei Typen von Netzelementen - so genannte Clients und so genannte Server unterschieden. Vom Client wird dem Benutzer mittels Benutzeroberfläche oder Benutzerschnittstelle der Zugang zu den Diensten oder Anwendungen angeboten. Vom Client wird dann die Verbindung zum Server aufgenommen, durch den dann die Funktionalitäten des Dienstes oder der Anwendung zur Verfügung gestellt werden. Mit der Verbreitung von Personal Computern wurde allerdings immer mehr Rechnerkapazität vom Server aus die Clients - die Personal Computers - ausgelagert. Vom Server werden daher bei so einer Architektur des Kommunikationsnetzes oft nur noch die Daten angeboten.

Sind nun in einem Kommunikationsnetz alle Netzelemente gleichberechtigt, d.h. gibt es keine Unterscheidung in z.B. Client oder Server bei den Netzelementen mehr, so wird die Architektur des Kommunikationsnetzes als System mit gleichgestellten Netzelementen bezeichnet.

In Kommunikationsnetzen mit gleichgestellten Netzelementen können daher von einem Netzelement sowohl Dienste in Anspruch genommen werden als auch Dienste zur Verfügung gestellt werden. Es gibt keine zentralen Netzelemente zur Steuerung der Kommunikation im Kommunikationsnetz. Die Benutzer eines solchen Kommunikationsnetzes, welche durch ihre Computern oder Kommunikationsendgeräten repräsentiert werden, sind alle gleichgestellt und gleichberechtigt und ihre Nutzer-Profile, von denen z.B. Name, Nutzerstatus, Email-Adresse, IP-Adresse, etc. beinhaltet werden, sind dezentral im Kommunikationsnetz hinterlegt.

Die Kommunikation in diesen Kommunikationsnetzen wird über das so genannte Transportnetz abgewickelt, durch das sichere und fehlerfreie Transportwege zur Verfügung gestellt werden. Meist wird als Transportnetz ein so genanntes paketorientiertes Kommunikationsnetz wie z.B. ein auf dem Internet Protocol IP basierendes Kommunikationsnetz, z.B. das Internet eingesetzt, wobei von paketorientierte Kommunikationsnetze Daten in Form von Paketen übertragen werden.

Von den Benutzern des Kommunikationsnetzes wird beispielsweise über ein IP-Netz oder das Internet als Transportnetz unter Verwendung der Adressen der Kommunikationsendgeräte der Benutzer im Kommunikationsnetz wie z.B. der IP-Adresse im Internet direkt miteinander kommuniziert. In diesem Fall werden Kommunikationsnetze mit gleichgestellten Netzelementen auch als Peer-to-Peer-Netze bezeichnet, wobei Peer für gleichgestellter oder gleichberechtigter Partner steht.

Kommunikätionsnetze mit gleichgestellten Netzelementen werden meist gebildet, um Informationen oder Dienste vorteilhaft auszutauschen. Dabei bildet das Kommunikationsnetz ein so genanntes "geschlossenes" Kommunikationsnetz. Das bedeutet, dass die Dienste und der Informationsaustausch nur von momentan aktiven Mitgliedern bzw. aktiven Benutzern des Kommunikationsnetzes genutzt werden können.

Ein Benutzer des Kommunikationsnetzes wird dann als aktiv bezeichnet, wenn ein Nutzer-Profil des Benutzers im Kommunikationsnetz und Informationen zu seinem Kommunikationsendgeräte - wie z.B. die IP-Adresse des Computers im Transportnetz verfügbar sind und das Kommunikationsendgerät des Benutzers eingeschaltet ist, damit Kontakt zum Kommunikationsendgerät dieses Benutzers hergestellt werden kann.

In Kommunikationsnetzen mit gleichgestellten Netzelementen kann es für verschiedene Dienste wie beispielsweise die Übertragung von Sprache zu Kommunikationszwecken wichtig sein, dass ein Kommunikationspartner auch dann erreicht werden kann, wenn dieser gerade nicht im Kommunikationsnetz mit gleichgestellten Netzelementen aktiv ist oder wenn er kein Mitglied des Kommunikationsnetzes mit gleichgestellten Netzelementen ist.

Wird nun ein Kommunikationsversuch mit einem im Kommunikationsnetz mit gleichgestellten Netzelementen nicht verfügbaren Kommunikationspartner (z.B. Kommunikationspartner ist gerade nicht registriert, Kommunikationspartner hat sein Kommunikationsendgerät abgeschaltet oder der Kommunikationspartner ist kein Mitglied des Kommunikationsnetzes mit gleichgestellten Netzelementen) gestartet oder werden aufgrund von Schwankungen in der Leistung des Kommunikationsnetzes keine Informationen für das Kommunikationsendgeräte des Kommunikationspartners im Kommunikationsnetz gefunden, so kann der Informationsaustausch mit diesem Kommunikationspartner nicht aufgebaut werden. Der Kommunikationsversuch muss abgebrochen werden.

Für die Kommunikation mit diesem Kommunikationspartner muss dann nach dem Abbruch ein neuer Kommunikationsversuch über ein anderes Kommunikationsnetz wie z.B. ein Public Switched Telephone Network PSTN oder ein Mobilfunknetz gestartet werden, wodurch für den Benutzer des Kommunikationsnetzes mit gleichgestellten Netzelementen zusätzlicher Aufwand entsteht. Außerdem wird es durch diesen neuen Kommunikationsversuch nur dann zum Informationsaustausch kommen, wenn der Kommunikationspartner auch über einen Zugang zum anderen, gewählten Kommunikationsnetz verfügt.

Ein weitere Problemstellung entsteht, wenn die Funktionalität eines paketorientierten Netzes, wie es auch als Transportnetz für ein Kommunikationsnetz mit gleichgestellten Netzelementen eingesetzt wird, durch Einbringen eines speziellen Netzelementes wie z.B. einem so genannte Softswitch mit speziellen Kommunikationsdiensten wie beispielsweise Sprachtelefonie erweitert wird. Mit steigender Teilnehmerzahl oder durch neue Dienste kann es zur Überlastung des Netzelementes, durch welches die Dienste zur Verfügung gestellt werden, kommen. Es ist zwar möglich weitere gleichartige Netzelemente in das paketorientierten Netz einzubringen. Dabei wird aber ein aufwendiges Netzmanagement innerhalb des paketorientierten Kommunikationsnetzes notwendig, um die durch die Dienste bzw. Teilnehmer erzeugte Last auf alle speziellen Netzelemente - das alte und die neu eingebrachten - zu verteilen.

Der vorliegenden Erfindung liegt daher die Aufgabe zugrunde, ein Verfahren anzugeben, durch welches einerseits die Zusammenarbeit zwischen dem Kommunikationsnetz mit gleichgestellten Netzelementen und anderen Kommunikationsnetzen ermöglicht wird und durch welches andererseits ein anderes Kommunikationsnetz, in dem spezielle Kommunikationsdienste verfügbar sind, auf einfache Weise ohne Einbringen von zusätzlichen Netzelementen und ohne aufwendiges Netzmanagement erweitert werden kann.

Die Lösung dieser Aufgabe erfolgt erfindungsgemäß durch ein Verfahren zur Steigerung der Verfügbarkeit von Diensten in einem ersten Kommunikationsnetz mit gleichgestellten Netzelementen, wobei eine Dienstesteuereinheit als gleichgestelltes Netzelement in das erste Kommunikationsnetz eingebunden wird, dann von der Dienstesteuereinheit Funktionen zur Verfügung gestellt werden, und durch diese Funktionen der Dienstesteuereinheit eine Zusammenarbeit des ersten Kommunikationsnetzes mit mindestens einem weiteren Kommunikationsnetz ermöglicht wird.

Die mit dem erfindungsgemäßen Verfahren erzielten Vorteile bestehen insbesondere darin, dass beim Fehlschlagen des Kommunikationsversuches mit einem Kommunikationspartner innerhalb des Kommunikationsnetzes mit gleichgestellten Netzelementen durch die Funktionen der Dienstesteuereinheit die Möglichkeit der Zusammenarbeit mit mindestens einem weiteren Kommunikationsnetz besteht. Der Kommunikationsversuch muss daher nicht mehr abgebrochen werden, sondern er wird aufgrund der Zusammenarbeit automatisch an mindestens ein weiteres Kommunikationsnetz weitergeleitet.

Außerdem ermöglicht das erfindungsgemäße Verfahren eine einfache Möglichkeit, in einem paketorientierten Netz das spezielle Netzelement (z.B. eine Dienstesteuereinheit), durch das spezielle Kommunikationsdienste im paketorientierten Netz zur Verfügung gestellt werden, zu entlasten und damit die Verfügbarkeit der Dienste zu sichern, ohne dass weitere Netzelemente oder ein aufwendiges Netzelement notwendig werden. Das spezielle Netzelement wird nur als gleichgestelltes und gleichberechtigtes Netzelement in das Kommunikationsnetz mit gleichgestellten Netzelementen eingebracht, indem von den Teilnehmern des paketorientierten Netzes ein Kommunikationsnetz mit gleichgestellten Netzelementen gebildet wird. Der Verkehr zwischen diesen Teilnehmern wird dann innerhalb des gebildeten Kommunikationsnetz mit gleichgestellten Netzelementen und das spezielle Netzelement für die Zusammenarbeit mit mindestens einem weiteren Kommunikationsnetz genutzt.

Es ist günstig, wenn das erste Kommunikationsnetz als Peer-to-Peer-Netzwerk ausgestaltet ist, da Peer-to-Peer-Netze auf kostengünstige Weise eingerichtet und einfach administriert werden können. Außerdem sind Peer-to-Peer-Netze aufgrund ihrer Architektur für Internet-Telefonie geeignet, da von ihnen als Transportnetz bereits ein IP-Netz bzw. das Internet benutzt wird.

Bei einem bevorzugten Ausführungsbeispiel des erfindungsgemäßen Verfahrens ist die Dienstesteuereinheit als so genannter Softswitch ausgestaltet. Ein so genannter Softswitch ist ein Netzelement, von dem beispielsweise Internet-Telefonie oder Funktionen von Telefonnebenstellenanlagen als Dienste angeboten werden. Durch die Einbindung eines Softswitches in das Kommunikationsnetz mit gleichgestellten Netzelementen können diese Dienste von den Mitgliedern dieses Kommunikationsnetz genutzt werden und damit die Zusammenarbeit mit eine beispielsweise zur Internet-Telefonie geeigneten Netz ermöglicht werden.

Vorzugsweise wird durch die Dienstesteuereinheit eine Gateway-Funktion für die Zusammenarbeit mit mindestens einem weiteren Kommunikationsnetz bereitgestellt. Durch die Gateway-Funktion wird vorteilhaft eine Zusammenarbeit mit einem Kommunikationsnetz erlaubt, von dem ein anderes Protokoll benutzt wird - wie beispielsweise den Public Switched Telephone Network PSTN.

Es ist außerdem günstig, wenn die Dienstesteuereinheit eine Datenbank umfasst, in der Daten für die Zusammenarbeit zwischen dem ersten Kommunikationsnetz mit mindestens einem weiteren Kommunikationsnetz dynamisch hinterlegt werden. In dieser Datenbank können Zusammenhänge zwischen Nutzer-Profil wie z.B. Name des Nutzers, Nutzerstatus, etc. und Informationen zu Kommunikationsendgeräten oder Kommunikationspartnern wie z.B. IP-Adresse, Email-Adresse, Telefonnummer, etc. gesammelt und verwaltet werden, wodurch Kommunikationsversuche mit Kommunikationspartner rascher und besser abgearbeitet werden können.

Es ist vorteilhaft, wenn das weitere Kommunikationsnetz als Public Switched Telephone Network PSTN ausgestaltet ist, da das PSTN oder vermittelte Telefonnetz weit verbreitet ist und daher angenommen werden kann, dass vom Kommunikationspartner, wenn er im Kommunikationsnetz mit gleichgestellten Netzelementen nicht aktiv ist, über eine Zugang zum PSTN verfügt wird.

Es ist auch günstig, wenn das weitere Kommunikationsnetz als Mobilfunknetz ausgestaltet ist, da über dieses Kommunikationsnetz auch mobile Kommunikationspartner erreicht werden können, denen gerade kein Computer oder Kommunikationsendgerät zur Verfügung steht, das im Kommunikationsnetz mit gleichgestellten Netzelementen registriert ist.

Eine zweckmäßige Weiterentwicklung des erfindungsgemäßen Verfahrens sieht vor, dass von der Dienstesteuereinheit Leistungsmerkmale einer Telefonanlage im ersten Kommunikationsnetz zu Verfügung gestellt werden. Denn so können von den Mitgliedern des Kommunikationsnetzes mit gleichgestellten Netzelementen Leistungsmerkmale wie z.B. Rufumleitung, Rufweiterleitung, Konferenzschaltung, etc., die eine Telefonanlage - d.h. eine private Vermittlungseinrichtung, von der mehrere Endgeräte wie z.B. Telefon, Fax, Anrufbeantworter sowohl untereinander als auch mit dem öffentlichen Telefonnetz verbunden wird - genutzt werden.

Es ist außerdem vorteilhaft, wenn die Telefonanlage als Central Office Exchange ausgestaltet ist, als Central Office Exchange CENTREX wird ein Dienst bezeichnet, durch den Funktionen einer Telefonanlage mit Hilfe von Elementen eines öffentlichen Telekommunikationsnetzes bereitgestellt werden.

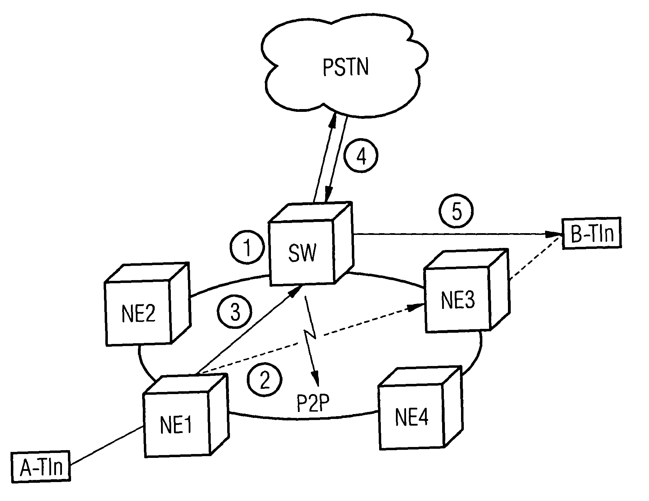

Die Erfindung wird nachfolgend in beispielhafte Weise unter Bezugnahme auf die beigefügte Figur 1 näher erläutert. Figur 1 zeigt dabei den schematischen Ablauf der Zusammenarbeit eines Kommunikationsnetzes mit gleichgestellten Netzelementen mit einem weiteren Kommunikationsnetz gemäß dem erfindungsgemäßen Verfahren.

In der Figur sind eine Kommunikationsnetz P2P mit mehreren gleichgestellten Netzelementen NE1, NE2, NE3, NE4 dargestellt, wobei das Netzelement NE1 einem Mitglied A-Tln des Kommunikationsnetzes P2P zugeordnet ist und das Netzelement NE3 von einem Benutzer B-Tln genutzt wird. Vom Kommunikationsnetz P2P wird den Mitgliedern A-Tln, B-Tln außerdem als Dienst Internet-Telefonie zur Verfügung gestellt.

In einem ersten Schritt 1 wird nun eine Dienststeuereinheit SW - beispielsweise ein Softswitch - als gleichgestelltes und gleichberechtigtes Netzelement in das Kommunikationsnetz P2P eingebracht.

Wird nun in einem zweiten Schritt 2 vom Mitglied A-Tln des Kommunikationsnetzes P2P versucht, den Benutzer B-Tln über den Dienst Internet-Telefonie des Kommunikationsnetzes P2P zu erreichen, so wird vom Netzelement NE1 gemäß den Regeln einer für das Kommunikationsnetz P2P vereinbarten Suchstrategie nach dem dezentral im Kommunikationsnetz P2P abgelegten Nutzer-Profil des Benutzers B-Tln gesucht. Ist diese Suche nach einer bestimmten Suchdauer nicht erfolgreich oder wird anhand des Nutzer-Profils des Benutzers B-Tln festgestellt, dass der Benutzer B-Tln zurzeit nicht über das Kommunikationsnetz P2P erreichbar ist, so wird in einem dritten Schritt 3 der Internet-Anruf zur Dienstesteuereinheit SW im Kommunikationsnetz P2P weitergeleitet.

In einem vierten Schritt 4 wird dann der Internet-Anruf des Mitgliedes A-Tln des Kommunikationsnetzes P2P anhand von weiteren Kommunikationsadressen, die im Nutzer-Profil des Benutzers B-Tln angegeben sind, an ein weiteres Kommunikationsnetz PSTN weitergeleitet. Dabei wird von der Dienstesteuereinheit auch eine möglicherweise notwendige Protokollumsetzung vorgenommen. In einem fünften Schritt 5 wird dann der Anruf über die Dienstesteuereinheit und unter Zusammenarbeit mit dem Kommunikationsnetz PSTN zum Benutzer B-Tln weitergeleitet.

Es können die Schritte 3 bis 5 des schematischen Ablaufs zur Zusammenarbeit des Kommunikationsnetzes P2P mit einem weiteren Kommunikationsnetz PSTN in gleicher Weise durchlaufen werden, wenn der Benutzer B-Tln innerhalb des Kommunikationsnetzes P2P unbekannt ist, aber eine weitere Kommunikationsadresse des Benutzers B-Tln verfügbar ist.

Unbekannt ist ein Benutzer B-Tln in Kommunikationsnetz P2P, wenn in Schritt 2 festgestellt wird, dass entweder kein aktuelles Nutzer-Profil des Benutzers B-Tln im Kommunikationsnetz P2P dezentral abgelegt oder dass vom Benutzer B-Tln kein Netzelement NE2, NE3, NE4 des Kommunikationsnetzes P2P genutzt wird.

Daher muss bei diesem Fall eine weitere Kommunikationsadresse des Benutzers B-Tln beim Kommunikationsversuch angegebenen werden wie beispielsweise eine entsprechende Telefonnummer für eine Zusammenarbeit mit einem PSTN-Netz oder Mobilfunknetz oder ein Session Initiation Protocol- Uniform Resource Locator SIP-URL für die Zusammenarbeit mit einem SIP basierten Kommunikationsnetz.

## Patentansprüche

1. Verfahren zur Steigerung der Verfügbarkeit von Diensten in einem ersten Kommunikationsnetz (P2P) mit gleichgestellten Netzelementen (NE1, NE2, NE3, NE4), **dadurch gekennzeichnet, dass** eine Dienstesteuereinheit (SW) als gleichgestelltes Netzelement in das erste Kommunikationsnetz (P2P) eingebunden wird, dass von der Dienstesteuereinheit (SW) Funktionen zur Verfügung gestellt werden, und dass durch diese Funktionen der Dienstesteuereinheit (SW) eine Zusammenarbeit des ersten Kommunikationsnetzes (P2P) mit mindestens einem weiteren Kommunikationsnetz (PSTN) ermöglicht wird.

2. Verfahren nach Anspruch 1, **dadurch gekennzeichnet, dass** das erste Kommunikationsnetz (P2P) als Peer-to-Peer-Netz ausgestaltet ist.

3. Verfahren nach einem der Ansprüche 1 bis 2, dass die Dienststeuereinheit (SW) als Softswitch ausgestaltet ist.

4. Verfahren nach einem der Ansprüche 1 bis 3, **dadurch gekennzeichnet, dass** von der Dienststeuereinheit (SW) eine Gateway-Funktion für die Zusammenarbeit mit mindestens einem weiteren Kommunikationsnetz (PSTN) bereitgestellt wird.

5. Verfahren nach einem der Ansprüche 1 bis 4, **dadurch gekennzeichnet, dass** die Dienstesteuereinheit (SW) eine Datenbank umfasst, in der Daten für die Zusammenarbeit zwischen dem ersten Kommunikationsnetz (P2P) mit mindestens einem weiteren Kommunikationsnetz (PSTN) dynamisch hinterlegt werden.

6. Verfahren nach einem der Ansprüche 1 bis 5, **dadurch gekennzeichnet, dass** das weitere Kommunikationsnetz (PSTN) als Public Switched Telephone Network PSTN ausgestaltet ist.

7. Verfahren nach einem der Ansprüche 1 bis 6, **dadurch gekennzeichnet, dass** das weitere Kommunikationsnetz (PSTN) als Mobilfunknetz ausgestaltet ist.

8. Verfahren nach einem der Ansprüche 1 bis 3, **dadurch gekennzeichnet, dass** von der Dienstesteuereinheit (SW) Leistungsmerkmale einer Telefonanlage im ersten Kommunikationsnetz (P2P) zur Verfügung gestellt werden.

9. Verfahren nach Anspruch 8, **dadurch gekennzeichnet, dass** die Telefonanlage als Central Office Exchange ausgestaltet ist.
